# EUROPÄISCHE PATENTANMELDUNG

(11) **EP 3 021 087 A1**
(43) Veröffentlichungstag der Anmeldung: **18.05.2016**
(21) Anmeldenummer: 15182857.1
(22) Anmeldetag: 28.08.2015
(51) Int. Cl.: G01D 4/00, G01D 5/39

(54) **VERFAHREN UND VORRICHTUNG ZUR ELEKTRONISCHEN ERFASSUNG EINER MOMENTANLEISTUNG AN EINEM MECHANISCHEN ZÄHLWERK**

(30) Priorität: 13.11.2014 DE 102014016714
(71) Anmelder: RWE Effizienz GmbH, 44139 Dortmund (DE)
(72) Erfinder: Kemmann, Harald, 42555 Velbert (DE); Becker, Marc Oliver, 42853 Remscheid (DE)
(74) Vertreter: Cohausz & Florack

(57) **Zusammenfassung**

Verfahren zur elektronischen Erfassung einer Momentanleistung an einem mechanischen Zählwerk, insbesondere an einem Zählwerk eines Verbrauchsmengenzählers. Um eine Momentanleistung ausgeben zu können wird ein optisches Auslesen zumindest zweier Zählerstände des Zählwerks zu jeweils einem Zeitpunkt, ein Ermitteln eines Differenzquotienten aus den zwei Zählerständen und den jeweiligen Zeitpunkten, und ein Ausgeben des Differenzquotienten als Momentanleistung vorgeschlagen.

## Beschreibung

Der Gegenstand betrifft ein Verfahren und einer Vorrichtung zur elektronischen Erfassung einer Momentanleistung an einem mechanischen Zählwerk. Hierzu wird mit einem optischen Sensor ein Bild des Zählwerks eines Zählers erfasst und ausgewertet. Insbesondere wird dabei die Veränderung des Zählerstands über die Zeit ausgewertet. Ferner werden für eine optimierte Auswertung aus den optischen Informationen "virtuelle" Nachkommastellen bestimmt. Hierdurch kann eine höhere Genauigkeit hinsichtlich der Ausgabe der Information zur Momentanleistung erzielt werden.

Mechanische Verbrauchsmengenzähler (Zähler), insbesondere Energieverbrauchszähler sind hinlänglich bekannt. Im Stand der Technik sind solche Zähler für beispielsweise Strom, Gas und Wasser seit langem bekannt. Allen Zählern gemeinsam ist ein mechanisches Zählwerk. In diesem mechanischen Zählwerk werden Nummernscheiben (auch Zählscheiben, Zählräder, Nummernräder oder dergleichen genannt) über mechanische Zählimpulse angetrieben. Die Nummernscheiben sind entlang einer gemeinsamen Achse nebeneinander angeordnet. Ein Sichtfenster zeigt den aktuellen Zählerstand (auch Zählwert genannt) derart an, dass die entlang des Sichtfensters horizontal entlang in etwa einer Gerade angeordneten, auf den Nummernscheiben angeordneten Ziffern einen aktuellen Zählwert repräsentieren.

Solche mechanischen Zähler müssen manuell ausgelesen werden. Das heißt, dass ein Mitarbeiter des Messstellenbetreibers oder des Energieversorgers regelmäßig, üblicherweise jährlich, den Zählerstand ablesen muss. Dies kann auch nur stichprobenartig erfolgen. Zählerstände können auch von Kunden selbst ausgelesen und mitgeteilt werden, doch ist eine Kontrolle stets notwendig. Dies führt zu erheblichen Verwaltungsaufwand.

Außerdem wird beispielsweise im Gas und/oder Strommarkt die Möglichkeit gefordert, laufend den Energieverbrauch erfassen zu können. Zum Einen soll dies dem Verbraucher Transparenz über seinen eigenen Energieverbrauch geben. Der Verbraucher soll stets den aktuellen Zählerstand auslesen können. Zum Anderen sollen beispielsweise zeitabhängige Tarife eingeführt werden, die ein zeitabhängiges Ablesen/Erfassen eines Zählerstands notwendig machen.

Neben den Genannten bestehen eine Vielzahl anderer Bedürfnisse, bestehende mechanische Zähler durch elektronische, intelligente Zähler auszutauschen. Bei mehr als 45 Millionen installierten mechanischen Elektrizitätszählern allein in der Bundesrepublik Deutschland ist ein solcher Austausch jedoch finanziell als auch von der notwendigen Installationszeit kaum darstellbar. Es müssen andere Möglichkeiten geschaffen werden, Energiemengenzähler elektronisch auslesen zu können.

Aus der deutschen Offenlegungsschrift DE 10 2010 053 019 A1 ist die Möglichkeit beschrieben, einen optischen Sensor an einem mechanischen Zähler anzuordnen. Hierzu wird der optische Sensor mittels einer Justiereinrichtung elektronisch an dem Zählwerk, insbesondere den Zählscheiben, ausgerichtet und anschließend auf der Scheibe des mechanischen Zählers verklebt. Nachteilig bei diesem Verfahren ist die aufwändige Elektronik, die zur Justierung des optischen Sensors an dem Zähler notwendig ist. Außerdem ist es nachteilig, dass die Erfassung der Ziffern des Zählers unter bestimmten Umweltbedingungen ungenau ist.

Um eine ausreichende Transparenz des aktuellen Verbrauchs zu ermöglichen, soll der Verbraucher auch Informationen zu einer Momentanleistung erhalten. Eine Momentanleistung kann dabei beispielsweise eine Volumen (Durchflussmenge), z.B. im Fall von Wasserzählern oder Gaszählern sein. Auch kann eine Momentanleistung eine elektrische Leistung sein.

Somit lag dem Gegenstand die Aufgabe zugrunde, eine erhöhte Transparenz beim Erfassen von Zählerständen zu schaffen.

Diese Aufgabe wird durch ein Verfahren nach Anspruch 1 und eine Vorrichtung nach Anspruch 16 gelöst.

Zunächst ist erkannt worden, dass selbst der Austausch bestehender Zähler durch Zähler mit optischem Ausgang in einem realistischen Zeitrahmen nicht möglich ist. Darüber hinaus sind die Kosten für mechanische Zähler mit optischem Ausgang erheblich, sodass nicht davon ausgegangen werden kann, dass in naher Zukunft große Teile der installierten mechanischen Zähler über optische Ausgänge verfügen. Zum anderen wäre es bei einem ohnehin durchzuführenden Austausch bestehender mechanischer Zähler durch solche mit optischem Ausgang durchaus möglich, diese Zähler direkt mit Kommunikationsschnittstellen zu versehen, um diese über Weitverkehrsnetze fernauslesbar zu machen.

Darüber hinaus ist auch erkannt worden, dass eine durch einen mechanischen Laien installierte Vorrichtung zum optischen Erfassen eines Zählwerts eines mechanischen Zählwerks zuverlässig den Zählerstand auslesen können muss. Dies ist insbesondere vor dem Hintergrund von sich stark verändernden Umgebungsbedingungen eine zwingende Voraussetzung, insbesondere auch um zeitabhängige Tarife einführen zu können. Auch sind die installierten mechanischen Zähler mit unterschiedlichsten Zählwerken ausgestattet, sodass ein optisches Erkennen der Ziffern auf den Zählwerken und insbesondere den Nummernscheiben bei unterschiedlichsten Zählwerken sichergestellt sein muss. Dies erfordert ein sicheres Erkennen der Ziffern auf den Zählwerken.

Ein gegenständlicher optischer Sensor ist vorzugsweise eine Kamera, beispielsweise eine digitale Kamera, insbesondere eine CCD Kamera. Der Sensor erfasst Bilder des mechanischen Zählers, insbesondere der Zählscheiben des mechanischen Zählers. Hierbei ist die Kamera vorzugsweise so auf den mechanischen Zähler ausgerichtet, dass diese einen Sichtbereich des eine Mehrzahl von Zählscheiben umfassenden Zählwerks erfasst. Innerhalb des Bildes sind vorzugsweise alle Zählscheiben bzw. der Ablesebereich aller Zählscheiben des mechanischen Zählwerks erkennbar. Es ist nun die Aufgabe, die Zählerstände zu erfassen, in dem die in dem Bild erfassten Bildinformationen so verarbeitet werden, dass tatsächlich die Ziffern auf den Zählscheiben erfasst werden.

Der optische Sensor erfasst in Zeitabständen, beispielweise im Sekundentakt, im Minutentakt, im Zweiminutentakt, im Fünfminutentakt oder dergleichen, jeweils ein Bild des Sichtbereichs. Durch eine geeignete Kalibrierung wird sichergestellt, dass auch bei verschiedensten mechanischen Zählwerkstypen stets eine korrekte Bild-Zahlen-Transformation ermöglicht ist. Hierzu wird in dem Bild der Bereich detektiert, in dem die Zählescheiben ihren Ablesebereich haben.

Gegenständlich kann bei jedem Auslesen eines Zählerstandes des Zählwerks ein Zeitstempel erfasst werden. Insbesondere kann zu jedem Zählerstand ein Zeitpunkt erfasst werden.

Durch Ermittlung eines Differenzquotienten aus den zwei Zählerständen und den jeweiligen Zeitpunkten ist es möglich, eine Momentanleistung zu bestimmen. Ein Differenzquotient kann gebildet werden aus (Zählerstand 2-Zählerstand 1)/ (Zeit 2-Zeit 1). Je feiner granuliert, also innerhalb kürzerer Zeitabstände, die Zählerstände erfasst werden können, desto genauer kann die Momentanleistung bestimmt werden. Das erfordert aber auch, da in kurzen Zeitabständen nur geringe Mengen durch den Zähler erfasst werden, also die Zählerstände zwischen zwei kurz hintereinander liegenden Messungen nur geringfügig voneinander abweichen, auch solche geringfügigen Abweichungen sicher ausgelesen und ein Zählwert zugeordnet werden sollten.

Gegenständlich wird der ermittelte Differenzquotient als Momentanleistung ausgegeben. Bei einer Erfassung einer Zählerstandes beispielsweise im Minutentakt kann jede Minute eine durchschnittliche Momentanleistung der vergangenen Minute ausgegeben werden. In diesem Falle wäre z.B. bei einem in kWh erfassten Zählerstand die Momentanleistung durch (Zählerstand(t2)-Zählerstand(t1))kWh/(t2-t1) = (Zählerstand(t2)-Zählerstand(t1))kWh/60s zu errechnen und es ergäbe sich eine mittlere Momentanleistung in kW.

Gegenständlich ist es möglich, dass der Zählerstand ein gemessenes Volumen wiedergibt. Dies kann beispielsweise bei Wasserzählern oder Gaszählern der Fall sein. Insbesondere bei Gaszählern ist das gemessene Volumen noch nicht ausreichend, eine Momentanleistung zu bestimmen. Vielmehr kann eine die Momentanleistung repräsentierende Größe bestimmt werden. Das gemessene Gasvolumen kann beispielsweise durch Umrechnung mit Hilfe einer bekannten Zustandszahl und/oder eines bekannten Abrechnungsbrennwertes in eine Arbeit (z.B. in kWh) umgerechnet werden. Die Arbeit kann dann in kWh angegeben werden. Wenn von Momentanleistung die Rede ist, so ist damit ein eine Momentanleistung repräsentierender Wert gemeint.

Auch ist es möglich, dass der Zählerstand eine gemessene elektrische Arbeit (in VAs) repräsentiert. Insbesondere kann der Zähler eine Stromstärke messen. Abhängig von einer Spannung und einer Zeit ergibt sich somit ebenfalls eine Arbeit, welche in Kilowattstunden ausgegeben werden kann. Durch das Erfassen von aufeinanderfolgenden Zählwerten von mechanischen Zählern und das Bilden eines Differenzquotienten kann eine Quasi-Realleistung ausgegeben werden. Die gegenständlich ausgegebene Momentanleistung entspricht der mittleren Leistung während der Dauer zwischen zwei Zeitpunkten zu denen Zählerstände erfasst werden.

Zählerstände werden vorzugsweise in Abständen von Minuten, zwei Minuten, fünf Minuten und/oder zehn Minuten ausgelesen. Je kürzer die Abstände zwischen dem Auslesen der Zählerstände sind, desto höher aufgelöst ist die ausgelesene Momentanleistung. Die zeitliche Auflösung der Momentanleistung ist jedoch durch die Genauigkeit des Zählwerks begrenzt. Abhängig davon, wie fein das Zählwerk die Verbrauchsmenge erfasst, kann in einem sehr kurzen Abstand zwischen zwei Zählwerten der Zähler seinen Zählstand messbar verändert haben oder nicht.

Durch zyklisches Auslesen, insbesondere automatisiert durch einen optischen Sensor, können in kurzen Zeitabständen Zählerstände ermittelt werden. Durch die Differenz sowohl der Zeit zwischen der Ermittlungen der Zählerstände als auch die Differenz der erfassten Werte der Zählerstände lassen sich die jeweiligen Deltas für sowohl Zeit als auch Verbrauchsmenge bestimmen.

Für jedes Zeitintervall kann eine Momentanleistung bestimmt und anschließend ausgegeben werden. Vorzugsweise lässt sich der Verlauf der Momentanleistung in einer Verlaufskurve auftragen. Eine solche Verlaufskurve kann visualisiert werden und dem Nutzer seinen tatsächlichen Verbrauch während beispielsweise eines Tages darstellen.

Um einen Verbrauch, also eine Momentanleistung, besser bewerten zu können, kann es sinnvoll sein, die ausgegebene Momentanleistung zusammen mit einem weiteren Parameter in dem zeitlichen Verlaufsprotokoll, insbesondere der Verlaufskurve auszugeben. Dabei ist insbesondere die Außentemperatur ein sinnvoller Wert, der zusammen mit der Momentanleistung ausgegeben werden kann. Sinkt die Außentemperatur ab, kann dies zu einem erhöhten Energiebedarf führen. Beispielsweise kann der Gasverbrauch in solchen Zeiten ansteigen und der Nutzer kann den Grund des gestiegenen Gasverbrauchs nachvollziehen.

Auch kann beispielsweise ein Helligkeitswert als weiterer Parameter aufgetragen werden. Bei absinkender Umgebungshelligkeit ist davon auszugehen, dass die durch elektrische Beleuchtung benötigte Momentanleistung ansteigt. Auch hier lässt sich dann durch den weiteren Parameter der Verlauf der Momentanleistung erklären. Gibt es im zeitlichen Verlauf der Momentanleistung Veränderungen, die nicht unmittelbar auf Veränderungen von äußeren Parameter zurückzuführen sind, kann dem Grund der Veränderung nachgegangen werden und gegebenenfalls Energieeinsparpotential aufgezeigt werden.

Gemäß einem Ausführungsbeispiel wird vorgeschlagen, dass zumindest ein Grenzwert der Momentanleistung parametriert wird. So können beispielsweise Eingriffsgrenzen festgelegt werden, bei deren Überschreitung Alarme ausgegeben werden. Alarme können beispielsweise per E-Mail, Kurznachrichtendienste, OTT-Dienste oder dergleichen an zuvor parametrierte Empfänger automatisch, z.B. über ein Weitverkehrsnetz, z.B. das Internet oder ein Mobilfunknetz oder ein Heimautomatisierungsbus, z.B. KNX/EIB, RWE Smart Home, Zigbee, Z-Wave, LON oder dergleichen, versendet werden.

Auch ist es möglich, dass die Art der ausgelösten Aktion parametriert wird. So kann z.B. parametriert werden, dass bei einem überschreiten einer Momentanleistung eines Gasverbrauchs eine Email versendet wird. können Mitteilungen und Nachrichten in einem Heimautomatisierungsnetz versendet werden. Z.B. können bei Alarmen Abschaltbefehle mittel KNX/EIB Nachrichten oder mittels RWE Smart Home, Zigbee, Z-Wave, LON oder dergleichen Nachrichten ausgesendet werden und ggf. Hochleistungsverbraucher, z.B. Wäschetrockner, zumindest zeitweise abgeschaltet werden. Hierdurch lässt sich eine Verbrauchskurve z.B. glätten.

Um bei der Erfassung der Zählerstände die Granularität des Zählers zu kennen, kann die Nachkommastelle automatisch durch Bilderkennungsverfahren, wie nachfolgend aufgezeigt werden wird, detektiert werden. Es ist aber auch möglich, dass die Anzahl der Vorkommastellen und/oder Nachkommastellen des Zählwerks manuell parametriert werden. In diesem Fall ist keine optische Erkennung von Nachkommastellen mehr notwendig. Die Auswertung kann dennoch die Arbeit aus den erfassten Zählerständen ermitteln.

Für das Erfassen der Momentanleistung ist davon auszugehen, dass zwischen zwei Zeitpunkten der Messung, also in einem Zeitintervall, der Zähler nur sehr geringe Verbrauchsmengen misst. Das führt dazu, dass sich die Zählscheiben zwischen den Messungen nur geringfügig bewegt haben und eine Zählscheibe z.B. nur um einen sehr kleinen Winkelabschnitt verdreht wurde. Insbesondere ist eine Veränderung der Position der Zählscheiben nur in einem Nachkommabereich wahrscheinlich. Aus diesem Grunde wird zunächst eine Erfassung des Zählerstandes einer Ziffer einer einer Nachkommastelle zugeordneten Zählscheibe vorgeschlagen. Vorzugsweise werden für die Berechnung der Momentanleistung ausschließlich die Zählscheiben bzw. die auf den Zählscheiben angeordneten Ziffern ausgewertet, welche Nachkommastellen darstellen.

Gemäß einem Ausführungsbeispiel wird vorgeschlagen, dass zusätzlich zum Erfassen von Ziffern auf einer Zählscheibe eine relative Position einer Ziffer der Zählscheibe in einem Ablesebereich der Zählscheibe erfasst wird. Hierdurch wird eine Erhöhung der Genauigkeit bei der Ermittlung der Momentanleistung ermöglicht. Wird die Position der Ziffer im Ablesebereich der Zählscheibe erfasst, kann zumindest eine virtuelle Nachkommastelle gebildet werden.

Zur Bestimmung zumindest einer virtuellen Nachkommastelle kann es sinnvoll sein, zunächst eine Kantenlänge einer Öffnung eines Ablesebereichs zu erfassen. Eine Ziffer einer Zählscheibe ist in einem Ablesebereich dargestellt. Dieser Ablesebereich stellt eine Öffnung in einer Blende des Zählers dar. Abhängig davon, wie groß diese Öffnung ist, insbesondere wie groß deren Höhe ist, kann die jeweilige Position einer Ziffer bewertet werden.

Darüber hinaus kann eine obere Zifferngrenze und eine untere Zifferngrenze bzw. deren Position bestimmt werden. Auch kann ein Abstand der Zifferngrenze zu einer Innenkante des Ablesebereichs bestimmt werden. Insbesondere kann für jede Ziffer zunächst bestimmt werden, wann diese genau mittig in dem Ablesebereich angeordnet ist. Dies kann beispielsweise während einer vollständigen Umdrehung eines Ziffernrades erfolgen. Eine Ziffer ist mittig in einem Ablesebereich angeordnet, wenn ein Abstand einer oberen Zifferngrenze zu der Oberkante des Ablesebereiches gleich einem Abstand einer unteren Zifferngrenze zu einer Unterkante des Ablesebereiches ist. Der Abstand zwischen einer oberen Zifferngrenze und einer Oberkante des Ablesebereichs kann in diesem Fall als obere Freibereichshöhe der Ziffer bezeichnet werden. Ein Abstand einer unteren Zifferngrenze zu einer Unterkante des Ablesebereichs kann als untere Freibereichshöhe der Ziffer bezeichnet werden.

Ein Abstand zwischen zwei Ziffern ergibt sich stets zu der Summe einer oberen Freibereichshöhe einer Ziffer (n+1) plus einer unteren Freibereichshöhe einer Ziffer (n). Hierbei kann n zwischen 0 und 9 liegen.

Abhängig von der erfassten Position der Zifferngrenzen, insbesondere der oberen und unteren Zifferngrenzen und/der der Abstand zumindest einer der Zifferngrenzen zu einer Kante des Ablesebereichs, kann eine Mittellinie zwischen den Ziffern bestimmt werden. Die Mittellinie liegt dabei stets zwischen einer oberen Freibereichshöhe einer Ziffer (n+1) und einer unteren Freibereichshöhe einer Ziffer (n). Die obere Freibereichshöhe kann beispielsweise mit bₙ und die untere Freibereichshöhe mit aₙ bezeichnet sein. n beziffert dabei die jeweilige Ziffer zwischen 0 und 9. Eine Freibereichshöhe dₙ berechnet sich dann zu aₙ+bₙ₊₁.

Es wird vorgeschlagen, dass abhängig von den erfassten Positionen bzw. dem Abstand der oberen Zifferngrenze und der unteren Zifferngrenze zu einer Kante eine Freibereichshöhe zwischen zumindest zwei Ziffern auf der Zählscheibe berechnet wird. Zu jeder Zeit kann auf einer Zählscheibe eine obere Zifferngrenze und eine untere Zifferngrenze detektiert werden. Es ist möglich, dass die obere Zifferngrenze einer Ziffer n+1 und die untere Zifferngrenze einer Ziffer n erkannt wird oder die obere und untere Zifferngrenze genau einer Ziffer n. Dies ist abhängig von der Winkelposition der Zählscheibe. In Kenntnis der Freibereichshöhe als auch in Kenntnis der oberen und unteren Zifferngrenzen bzw. deren Abstand zu einer Kante des Ablesebereichs sowie in Kenntnis der Gesamthöhe eines Ablesebereiches kann eine Position einer Mittellinie innerhalb des Ablesebereichs zwischen zwei Ziffern einer Zählscheibe berechnet werden.

Die Gesamthöhe eines Ablesebereichs bzw. der Öffnung des Ablesebereiches kann in zehn gleich große Intervalle unterteilt werden. Abhängig von der Position der Mittellinie innerhalb des Ablesebereichs kann hiermit eine virtuelle Nachkommastelle bestimmt werden. Insbesondere kann ausgehend von der Unterkante der Öffnung des Ablesebereiches hin zur oberen Kante des Ablesebereiches eine Intervallstaffelung von 0 bis 1,0 in Zehntelschritten erfolgen. Liegt die Mittellinie auf der Unterkante so ist eine Ziffer genau mittig in der Öffnung des Ablesebereiches und die virtuelle Nachkommastelle kann zu 0 bestimmt werden. Liegt die Mittellinie beispielsweise genau in der Mitte des Ablesebereiches, so ist im Ablesebereich jeweils eine untere Hälfte einer Ziffer n und eine obere Hälfte einer Ziffer n+1 dargestellt und die virtuelle Nachkommastelle kann beispielsweise zu 0,5 bestimmt werden, da die Mittellinie im Intervall 0,5 liegt. Auch kann ein Quotient aus dem Abstand der Mittellinie zu einer Kante und der Gesamthöhe des Ablesebereichs zumindest eine Nachkommastelle berechnet werden.

Durch optisches Ermitteln der Zifferngrenzen bzw. der Abstände der Zifferngrenzen zu zumindest einer Kante des Ablesebereichs sowie der Gesamthöhe der Öffnung des Ablesebereiches lässt sich die Mittellinie zwischen zwei Ziffern bestimmen. Durch Auswertung der Position der Mittellinie relativ zur Gesamthöhe der Öffnung des Ablesebereiches lässt sich eine Nachkommastelle bilden.

Abhängig von der Auflösungsgenauigkeit lässt sich die Höhe eines Ablesebereiches auch mehr als zehn Intervalle, beispielsweise 100 Intervalle unterteilen und es lassen sich somit zwei Nachkommastellen, nämlich Zehntel und Hundertstel abhängig von der bestimmten Mittellinie ermitteln.

Eine eigenständige oder zusätzliche Erfassung einer virtuellen Nachkommastelle kann beispielsweise dadurch ermöglicht sein, dass ein erfasstes Bild eines Ablesebereiches mit Ausschnitten einer Abwicklung einer Zählscheibe verglichen werden. Dabei ist es beispielsweise möglich, das erfasste Bild des Ablesebereiches mit einem Bild einer Abwicklung einer Zählscheibe zu vergleichen. Das Bild der Abwicklung wird beispielsweise über ein entlang der Abwicklung verschobenes Fenster ermittelt. Die Fensterhöhe entspricht dabei beispielsweise der Gesamthöhe der Öffnung des Ablesebereiches. Während das Fenster entlang der Abwicklung der Zählscheibe verschoben wird, wird mit jeder Verschiebung das Bild des Ablesebereiches mit dem Bild des Fensters verglichen. Dabei kann beispielsweise das Fenster in hundert Intervallen über die Abwicklung der Zählscheibe verschoben werden. Dies bedeutete, dass zwischen jeder Ziffer (0-9) der Abwicklung jeweils zehn Bilder des Fensters erfasst werden und mit dem Bild des Ablesebereiches erfasst werden können. Durch den Vergleich kann festgestellt werden, an welcher Position des Fensters das darin abgebildete Bild am besten mit dem erfassten Bild des Ablesebereiches übereinstimmt und diese Position kann als Position der Zählscheibe angenommen werden. Bei einer Schrittweite der Verschiebung des Fensters von einem hundertstel ergibt sich eine virtuelle Nachkommastelle. Wird die Intervallweite der Verschiebung des Fensters auf ein tausendstel verringert, so liegen zwischen jeweils zwei Ziffern hundert Verschiebungen des Fensters. Es können dadurch beispielsweise zwei virtuelle Nachkommastellen berechnet werden. Durch den Vergleich des erfassten Bildes des Ablesebereiches mit den Bildern der Abwicklung kann festgestellt werden, in welcher Winkelposition sich die Zählscheibe befindet und somit eine virtuelle Nachkommastelle berechnet werden. Die Winkelposition kann bei einer Schrittweite von einem Hundertstel auf 3,6 Grad genau bestimmt werden.

Der Vergleich des erfassten Bildes des Ablesebereiches mit dem Bild der Abwicklung kann beispielsweise mittels einer Kreuzkorrelation erfolgen. Der Verlauf der Kreuzkorrelation entlang der Verschiebung des Fensters über die Abwicklung zeigt dabei vorzugsweise ein absolutes Maximum, an dem angenommen wird, dass dies die Position ist, die die Zählscheibe beim Ablesen des Bildes tatsächlich erreicht hat. Gemäß einem Ausführungsbeispiel wird vorgeschlagen, dass eine Farbinformation von zumindest einer der Zählscheiben und/oder von einem die Zählscheiben umgebenden, einer Öffnung aufweisenden Ablesebereich ausgewertet wird. Vorzugsweise wird abhängig von der Auswertung der Farbinformation zumindest eine der Zählscheiben zu einem Nachkommabereich oder einem Vorkommabereich zugeordnet. Insbesondere kann erkannt werden, dass eine Farbinformation einer Zählscheibe gegenüber den Farbinformationen anderen Zählscheiben verändert ist. Dies kann für einen Rückschluss darauf verwendet werden, ob eine Zählscheibe sich in einem Nachkommabereich befindet.

Vorzugsweise wird die Farbinformation von Ziffern auf den Zählscheiben ausgewertet. Häufig kommt es, dass Ziffern auf Zählscheiben, die Nachkommastellen repräsentieren, in Rot dargestellt werden. Durch Auswertung dieser Farbinformationen kann eine Zählscheibe einem Vor- oder Nachkommabereich zugeordnet werden. Auch kann der Bereich der Blende, der der Öffnung angrenzend ist, hinsichtlich seiner Farbe ausgewertet werden. Häufig wird auch die Fläche der Blende im Bereich der Öffnung in einer anderen Farbe, vorzugsweise rot dargestellt. Wird diese Farbinformation erkannt, können die dort angeordneten Zählscheiben einem Nachkommabereich zugeordnet werden.

Da die Nachkommastellen häufig in einer anderen Farbe abgesetzt sind, als die Vorkommastellen, kann es ausreichend sein, dass eine Farbinformation genau einer von zwei verschiedenen Farbbereichen zugeordnet wird. Je nachdem, welchem Farbbereich die Farbinformation zugeordnet ist, kann eine Entscheidung darüber getroffen werden, ob eine Zählscheibe ein Vorkommabereich oder ein Nachkommabereich darstellt. Die Farbbereiche können insbesondere rot und weiß sein, wobei rot häufig einen Nachkommabereich repräsentiert.

Nachfolgend wird der Gegenstand anhand einer ein Ausführungsbeispiel zeigenden Zeichnung näher erläutert. In der Zeichnung zeigen:
- Fig. 1a: ein mechanisches Zählwerk eines Energiemengenzählers;
- Fig. 1b: eine Seitenansicht einer Zählscheibe eines solchen Zählwerks;
- Fig. 2a: einen Energiemengenzähler gemäß einem Ausführungsbeispiel;
- Fig. 2b: einen weiteren Energiemengenzähler gemäß einem Ausführungsbeispiel;
- Fig. 3: ein erfasstes Bild eines Zählwerks;
- Fig. 4a-d: Beispiele von Zählerständen eines Zählwerks;
- Fig. 5a-b: Verläufe von erfassten Momentanleistungen;
- Fig. 6a-c: verschiedene Ziffern einer Zählscheibe mit oberen und unteren Zifferngrenzen;
- Fig. 7a-c: eine Veränderung einer Winkelposition einer Zählscheibe beim Durchlaufen der Ziffern 7 bis 9;
- Fig. 8: eine Abwicklung einer Zählscheibe mit einem darüber verschobenen Fenster.

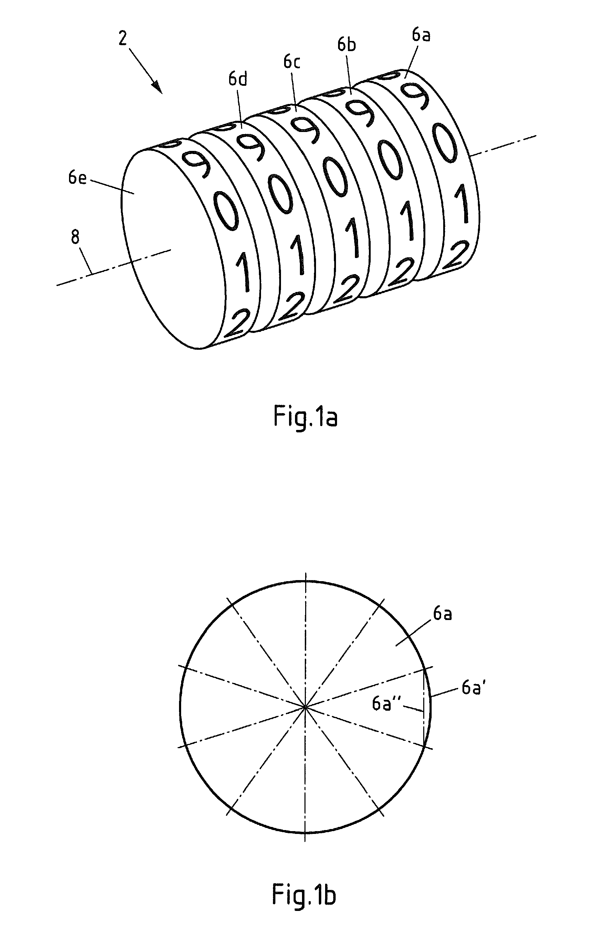

Verbrauchsmengenzähler, wie beispielsweise Stromzähler, Gaszähler, Wasserzähler oder dergleichen werden in herkömmlicher Weise mit einem mechanischen Zählwerk, wie es beispielhaft in Figur 1a dargestellt ist, betrieben. Das mechanische Zählwerk 2 wird über einen nicht dargestellten, mechanischen Antrieb angetrieben. Der mechanische Antrieb übermittelt Zählimpulse von einem mechanischen oder elektromechanischen Sensor. Der Sensor erfasst beispielsweise eine Stromstärke, einen Volumenstrom oder dergleichen und gibt abhängig von den erfassten Werten mechanische Zählimpulse an das Zählwerk 2 ab. Die Zählimpulse treiben die in dem Zählwerk 2 eingebauten Zählscheiben 6a-e mechanisch derart an, dass jede vollständige Umdrehung einer ersten Zählscheibe 6a zu einer 1/10 Drehung einer nachgelagerten Zählscheibe 6b führt. Hierdurch wird ein dezimales Zählsystem über die Zählscheiben 6a-e realisiert. Die Zählscheiben 6a-e rotieren um eine gemeinsame Drehachse 8.

Figur 1b zeigt eine Seitenansicht der Zählscheibe 6a. Die Zählscheibe 6a ist in zehn gleich große Winkelabschnitte 6a' unterteilt. In jedem der Winkelabschnitte 6a' ist eine Ziffer 0-9 aufgetragen. Der Bereich, in dem die Ziffer aufgetragen sein kann, ergibt sich aus der Länge der Sekante 6a" über den Kreisbogen 6a'. Bei einer vollständigen Umdrehung zeigt die Zählscheibe 6a jede Ziffer 0-9 genau einmal an. Jeder Ziffer ist ein Kreisbogen von 36° zugeordnet. Anhand der Winkelposition der Zählscheibe kann bestimmt werden, wo sich eine Ziffer befindet.

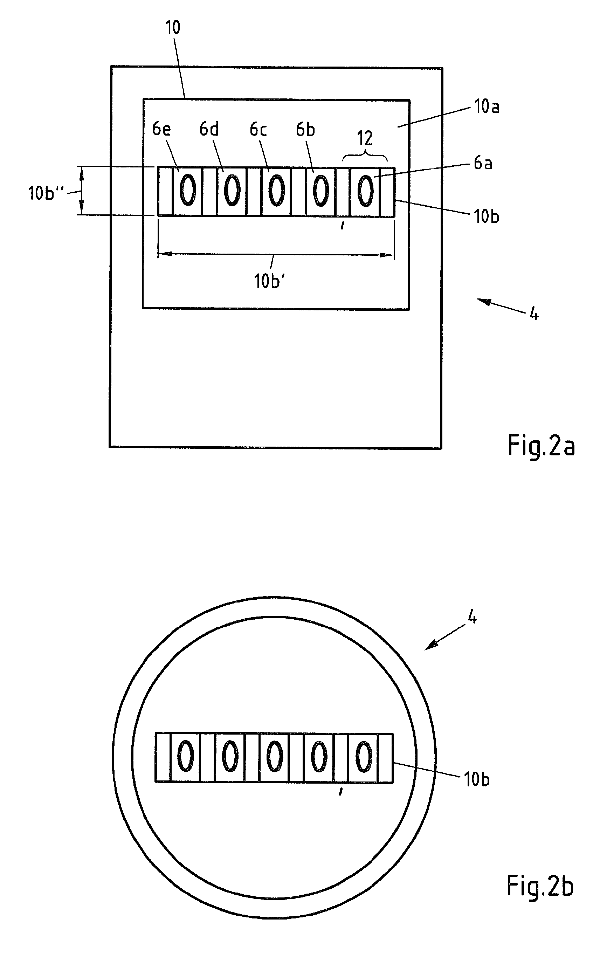

Das Zählwerk 2 wird in einem Zähler 4, wie in Figur 2a dargestellt ist, eingebaut. In dem Zähler 4 ist in der Regel eine Scheibe 10 aus einem bruchfesten Glas oder Plexiglas angeordnet. Durch die Scheibe 10 kann eine Blende 10a betrachtet werden. Die Blende 10a verdeckt das Zählwerk 2 bis auf ein Sichtfenster 10b bzw. den Ablesebereich. Das Sichtfenster 10b bzw. der Ablesebereich hat eine Breite 10b' in etwa entsprechend der Breite des Zählwerks 2. Die Höhe 10b" ist in der Regel in etwa entsprechend der Länge der Sekante 6a".Durch das Rotieren der Zählscheiben 6a-e werden bei einer vollständigen Umdrehung einer der Zählscheiben 6a-e in dem Sichtfenster 10b jeweils einmal die Ziffern 0-9 dieser Zählscheibe 6a-e dargestellt. Bei einer Drehung von 36 wird die Zählscheibe 6a-e um jeweils genau eine Ziffer weiter gedreht. Eine Drehung von 18° bedeutet eine Verdrehung der Zählscheibe um 0,5 Ziffern. Somit kann die Winkelposition zu Ermittlung einer virtuellen Nachkommastelle verwendet werden.

Zur Darstellung von Nachkommastellen des Zählwertes ist eine oder mehr Zählscheiben 6a-e in einem insbesondere rot markierten Nachkommabereich 12 angeordnet. In der Figur 2a ist dies die Zählscheibe 6a, wohingegen die weiteren Zählscheiben 6b-e außerhalb des Nachkommabereichs 12 angeordnet sind. Bei einem Stromzähler wird in der Regel der Energieverbrauch in Kilowattstunden gemessen. Die erste Nachkommastelle löst den Verbrauch in Zehntel Kilowattstunden auf. Eine mögliche zweite oder dritte Nachkommastelle löst den Verbrauch entsprechend in 1/100 bzw. 1/1000 kWh auf. Bei einem Wasserzähler wird in der Regel die Durchflussmenge in Kubikmetern gemessen. Hierbei können ein, zwei oder drei Nachkommastellen den Verbrauch in Zehntel, Hundertstel oder Tausendstel Kubikmeter auflösen. Selbiges gilt natürlich auch für einen Gaszähler.

Zur besseren Markierung des Nachkommabereichs 12 ist es auch möglich, das die Ziffern auf der Zählscheibe 6a in einer anderen Farbe dargestellt sind als die Ziffern auf den anderen Zählscheiben, z.B. rot gegenüber weiß. Auch kann ein Bereich um die Ziffern der Nachkommastellen herum, im Bereich des Sichtfensters 10b ebenfalls andersfarbig, insbesondere rot abgesetzt sein.

Figur 2b zeigt eine schematische Ansicht eines weiteren möglichen Energiemengenzählers 4. Die Darstellung zeigt einen häufig verwendeten Gas- oder Wasserzähler 4. Auch hier ist ein Sichtfenster 10b an einem Zählwerk 2 angeordnet.

Zur Erfassung eines Zählwerts des mechanischen Zählwerks wird nun vorgeschlagen, dass im Bereich der Blende 10a bzw. des Sichtfensters 10b ein Bild mittels eines optischen Sensors, beispielsweise einer Digitalkamera erfasst wird. Die Kamera (nicht dargestellt) kann vor der Scheibe 10 angeordnet sein und in vorzugsweise zyklischen Abständen, beispielsweise im Sekundentakt, Bilder von dem Zählwerk 2 im Bereich der Blende 10a erfassen.

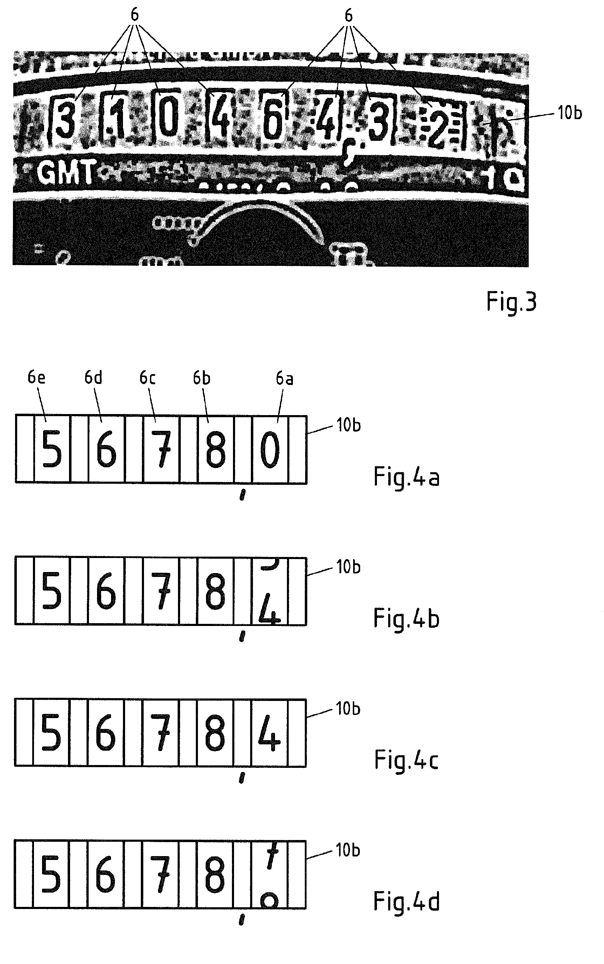

Ein solches von einer Kamera erfasstes Bild eines Stromzählers ist in der Fig. 3 dargestellt. Das in der Fig. 3 dargestellte Bild ist in Grauwerte aufgelöst. Zu erkennen ist in der Fig. 3, dass in dem Sichtfenster 10b eine Mehrzahl von Zählscheiben 6 angeordnet sind. Für die Erfassung des Zählerstandes ist es notwendig, die Ziffern im Sichtfenster 10b bzw. in den jeweiligen Ablesebereichen zu erfassen und zu bestimmen. Hierzu muss in dem in Fig. 3 gezeigten Bild zunächst bestimmt werden, welche Bildbereiche eine gültige Ziffer des Zählerstandes darstellen. Diese Kalibrierung muss zumindest bei der Initialisierung des optischen Sensors durchgeführt werden, kann jedoch auch in Abständen erneuert werden.

Fig. 4a zeigt einen Ablesebereich 10b der Zählscheiben 6a-e. In der Fig. 4 ist zu erkennen, dass der Zählerstand des Zählers 2 beispielsweise bei 5 6 7 8, 0 liegt. Dies kann beispielsweise ein Wert für eine elektrische Arbeit, beispielsweise in Kilowattstunden sein.

Durch fortlaufende Messung des Stroms durch den Zähler wird das Zählwerk 2 fortgeschrieben, was sich in den veränderten Zählständen gemäß der Fig. 4b bis d niederschlägt. In der Fig. 4b ist zu erkennen, dass die Zählscheibe 6a beispielsweise eine Winkelposition eingenommen hat bei der in dem Ablesebereich 10b ein unterer Bereich der Ziffer 3 und ein oberer Bereich der Ziffer 4 zu erkennen ist. Mit herkömmlichen Verfahren wäre es nicht möglich, ausgehend von dem Zählerstand gemäß Fig. 4a zum Zählerstand gemäß Fig. 4b eine genaue Momentanleistung zu errechnen. Insbesondere wäre es nicht möglich, festzustellen, wie weit die Zählscheibe 6a bereits von der Ziffer 3 zur Ziffer 4 weitergedreht wurde. Hierzu kann es notwendig sein, eine Mittellinie zwischen den Ziffern 3 und 4 zu bestimmen, wie nachfolgend gezeigt wird. Auch kann es sinnvoll sein, obere und untere Zifferngrenzen zu bestimmen. Auch kann es sinnvoll sein Freibereichshöhen zwischen jeweils zwei Ziffern zu bestimmen. Diese Informationen können dann dazu verwendet werden, zumindest eine virtuelle Nachkommastelle zu bilden.

In Fig. 4c ist der Zählerstand zu 5 6 7 8, 4 verändert worden. In der Fig. 4d ist wiederum ein Zählerstand 5 6 7 8 , X zu erkennen, bei dem die Nachkommastelle X zwischen der Ziffer 7 und der Ziffer 8 angezeigt ist. Auch hier wäre es nicht möglich, mit herkömmlichen Verfahren, eine Momentanleistung zu ermitteln da nicht erkannt wurde, in welcher Winkelposition zwischen zwei Ziffern sich eine Zählscheibe befunden hat.

Die Zählerstände gemäß der Fig. 4 bis d werden jeweils zu bestimmten Zeitpunkten ermittelt. Der Zählerstand gemäß der Fig. 4a kann beispielsweise der Wert P1 sein und die Zeit kann die Zeit T1 sein. Der Zählerstand gemäß der Fig. 4b kann beispielsweise der Wert P2 und die Zeit die Zeit T2 sein. Der Zählerstand gemäß der Fig. 4c kann beispielsweise der Wert P3 und zur Zeit T3 erfasst werden. Der Zählerstand gemäß der Fig. 4d kann beispielsweise den Wert P4 haben und zur Zeit T4 erfasst worden sein.

Zur Erfassung einer mittleren Momentanleistung zwischen den Messungen gemäß den Figuren 4a und 4b kann beispielsweise folgende Rechnung durchgeführt werden P2-P1/T2-T1. Dieser Differenzquotient ergibt die mittlere Momentanleistung zwischen den Zeitpunkten zu den die Zählerstände gemäß Fig. 4a und 4b ermittelt wurden. Selbiges kann für das Intervall zwischen der Messung gemäß Fig. 4b und der Messung gemäß Fig. 4c mit P3-P2/T3-T2 berechnet werden. Ebenfalls kann eine Momentanleistung für das Intervall zwischen den Messungen gemäß Fig. 4d und 4c mit P4-P3/T4-T3 berechnet werden.

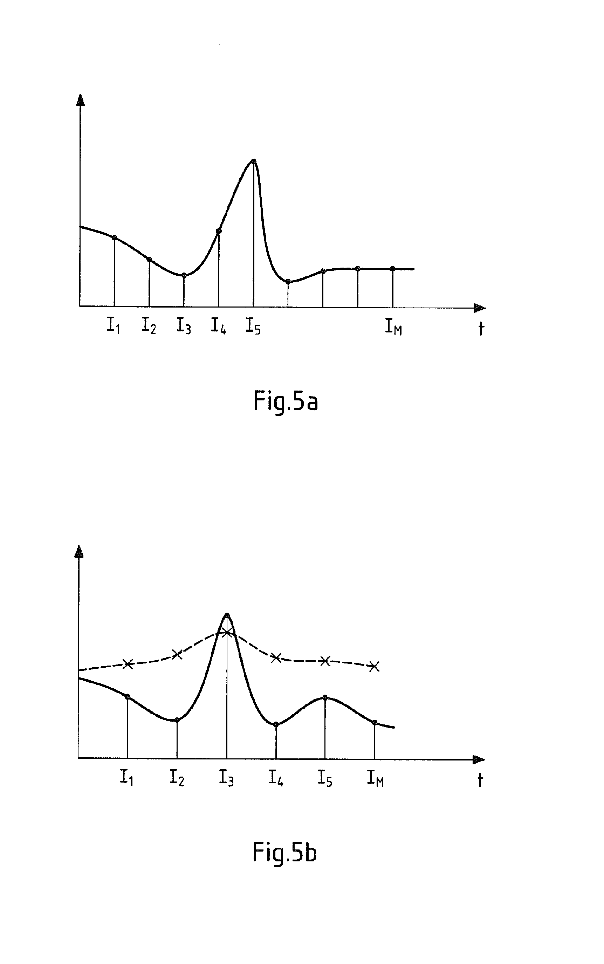

Die ermittelten Momentanleistungen lassen sich beispielsweise in einem Leistungszeitdiagramm wie in Fig. 5a gezeigt ist auftragen. Insbesondere ist für jedes Intervall I₁-I_{M} der berechnete Wert der Momentanleistung aufgetragen. Die Verlaufskurve kann durch Interpolation zwischen den berechneten Werten der Momentanleistung gemäß der Fig. 5a dargestellt werden.

In Fig. 5b ist neben dem Verlauf der ermittelten Momentanleistung auch ein weiterer Parameter, beispielsweise eine Außentemperatur aufgetragen. Zu jedem Zeitpunkt eines Intervalls I₁-I_{M} kann eine Außentemperatur erfasst werden und ebenfalls in dem Diagramm aufgetragen werden. Dies ist in der Fig. 5b durch Kreuze dargestellt. Durch Auswertung des Verlaufs der Außentemperatur im Vergleich vom Verlauf der Momentanleistung kann ein Rückschluss darauf geschlossen werden, ob eine sich verändernde Momentanleistung aufgrund geänderter äußerer Bedingungen ergibt oder andere Gründe hierfür bestehen. Durch diesen Vergleich können Energiesparpotentiale aufgezeigt werden.

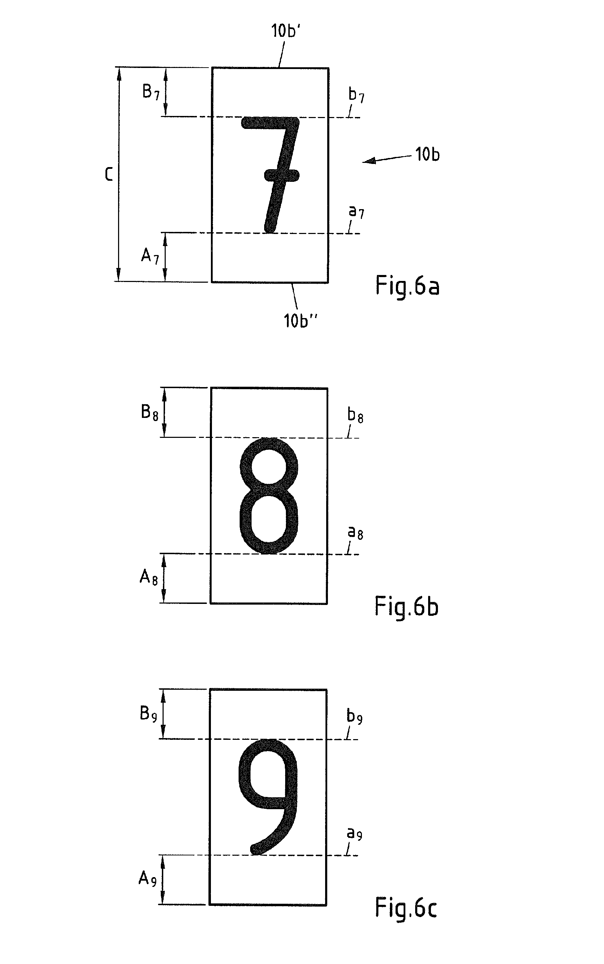

Zur Ermittlung einer Momentanleistung ist es notwendig, auch eine Winkelposition eines Zählrades 6a bestimmen zu können, wenn im Ablesebereich nicht eindeutig genau eine Ziffer zu erkennen ist oder wenn eine Ziffer in dem Ablesebereich nicht genau mittig angeordnet ist. Insbesondere wenn sich die Zählscheibe so weitergedreht hat, dass ein unterer Bereich einer ersten Ziffer n und ein oberer Bereich einer nächsten Ziffer n+1 dargestellt ist, kann es notwendig sein, eine Mittellinie zwischen diesen Ziffern n und n+1 bestimmen zu können und mit deren Hilfe eine virtuelle Nachkommastelle zu bilden. Hierzu kann es notwendig sein, eine obere und eine untere Zifferngrenze zu bestimmen. Diese Bestimmung kann vorzugsweise für jede Ziffer 0-9 auf einer Zählscheibe 6a durchgeführt werden. Dies ist beispielhaft für die Ziffern 7-9 in den Fig. 6a-c dargestellt.

In der Fig. 6a ist zu erkennen, dass eine obere Freibereichshöhe B₇ und eine untere Freibereichshöhe A₇ erfasst werden kann. Die obere Freibereichshöhen B₇ kann aus einem Abstand zwischen der oberen Ziffernkante b₇ und einer Oberkante 10b' des Ablesebereiches 10b bestimmt werden. Die unterer Freibereichshöhe A₇ kann aus einem Abstand zwischen der unteren Ziffernkante a7 und einer Unterkante 10b" des Ablesebereichs 10b bestimmt werden. Außerdem kann die Gesamthöhe C des Ablesebereichs 10b bestimmt werden.

Gemäß der Fig. 6b kann eine obere Freibereichshöhe B₈ und eine untere Freibereichshöhe A₈ ausgehend von den erkannten Ziffernkanten b₈ und a₈ bestimmt werden.

Auch kann wie in Fig. 6c dargestellt ist, für die Ziffer 9 eine obere Freibereichshöhe B₉ und eine untere Freibereichshöhe A₉ ausgehend von den erkannten Ziffernkanten b₉ und a₉ bestimmt werden. Eine Gesamtfreibereichshöhe D₇ zwischen beispielsweise der Ziffer 7 und der Ziffer 8 ergibt sich beispielsweise aus A₇+B₈. Die Gesamtfreibereichshöhe D₈ zwischen der Ziffer 8 und der Ziffer 9 ergibt sich aus A₈+B₉. Eine Freibereichshöhe Dₙ einer Ziffer n ergibt sich zu Aₙ + Bₙ₊₁, wobei n die jeweilige Ziffer 0 bis 9 darstellt, wobei sich die Freibereichshöhe D₉ aus B₉+A₀ ergibt.

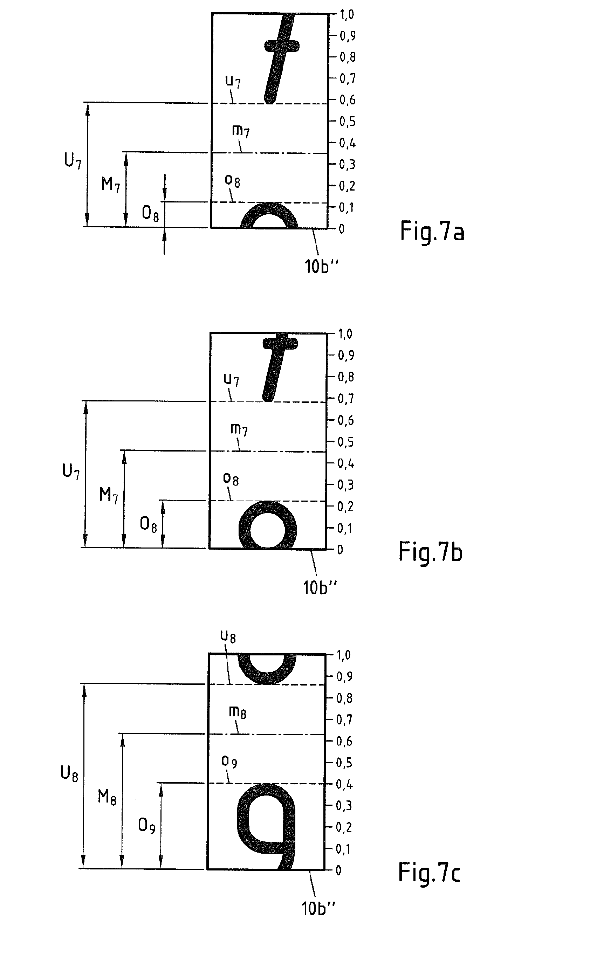

In Kenntnis der gesamten Freibereichshöhe Dₙ für jede Ziffer, als auch der Position zumindest einer der Ziffernkanten ist es möglich, eine Mittellinie zwischen jeweils zwei Ziffern zu bestimmen. Dies ist in der Fig. 7a dargestellt.

In der Fig. 7a ist dargestellt, dass eine Position einer unteren Ziffernkante u₇ und eine Position einer obere Ziffernkante o₈ detektiert werden kann. Hieraus kann z.B. der Abstand O₈ der Ziffernkante o₈ zur Unterkante 10b" und der Abstand U₇ der Ziffernkante u₇ zur Unterkante 10b" bestimmt werden. Die Position der Mittellinie m₇ bzw. der Abstand M₇ der Mittellinie zur Unterkante 10b" kann beispielsweise aus der Summe O₈+D₇/2 bestimmt werden.

Eine entsprechende Rechnung für die Mittellinie m7 kann gemäß der Fig. 7b durchgeführt werden. Zu erkennen ist, dass die Mittellinie m7 von Fig. 7a zu 7b vorangeschritten ist. Durch die Berechnung M₇=O₈+D₇/2 kann der Abstand M₇ der Mittellinie m7 zur Unterkante 10b"bestimmt werden.

Wird die Gesamthöhe C beispielsweise in zehn gleiche Intervalle unterteilt, beispielsweise ausgehend von der Unterkante 10b" zur Oberkante 10b' kann festgestellt werden, in welchem der Intervalle die Mittellinie m7 liegt. Im Beispiel der Fig. 7a liegt die Mittellinie m7 beispielsweise im Intervall zwischen 0,3 und 0,4. Somit kann im Beispiel der Fig. 7a beispielsweise darauf geschlossen werden, dass das Ziffernrad eine Winkelposition derart eingenommen hat, dass diese den Wert 7,3 darstellen soll.

Im Beispiel der Fig. 7b kann die Mittellinie m7 beispielsweise im Intervall zwischen 0,4 und 0,5 liegen und die Zählscheibe beispielsweise den Wert 7,4 anzeigen.

Eine erhöhte Genauigkeit würde dadurch erreicht, dass die Intervallbreite nicht in Zehntel, sondern in Hundertstel Schritten durchgeführt ist. Die Mittellinie bzw. die Position der Mittellinie kann dann nicht nur auf ein Zehntel, sondern auf ein Hundertstel genau bestimmt werden und somit zwei virtuelle Nachkommastellen gebildet werden.

Fig. 7c zeigt das Zählrad zwischen den Ziffern 8 und 9. Erfasst wird beispielsweise die Ziffernoberkante o9 und daraus der Abstand O₉ zur Unterkante 10b". Dar Abstand der Mittellinie M₈ zur Unterkante kann dann kann berechnet werden aus O₉+D₈/2. Auch hier kann wieder durch Vergleich der Position der Mittellinie m8 mit der Gesamthöhe C eine virtuelle Nachkommastelle gebildet werden.

Auch ist der Abstand M der Mittellinie zur Unterkante 10b" im Verhältnis zur Gesamthöhe C berechenbar, beispielsweise mit M₈/C. Der sich hieraus ergebende Quotient ergibt ebenfalls die relative Position der jeweiligen Mittellinie zur Gesamthöhe. Auch hieraus lässt sich beispielsweise zumindest eine, vorzugsweise zwei virtuelle Nachkommastellen bilden.

Eine weitere Erhöhung der Genauigkeit lässt sich dadurch erreichen, dass eine Abwicklung einer Zählscheibe 6a mit einem erfassten Bild 12 eines Ablesebereiches 10b verglichen wird. Dies kann auch unabhängig von der Bestimmung der Mitellinie erfolgen.

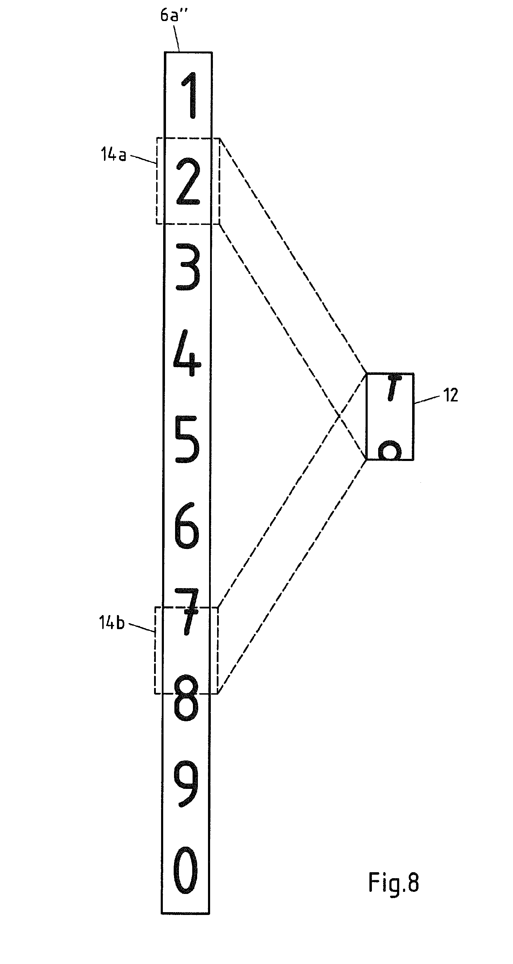

Hierzu wird entlang einer Abwicklung 6a" einer Zählscheibe 6a, wie sie in Fig. 8 dargestellt ist, ein Vergleichsfenster 14 in Intervallen, z.B. in einhundert Schritten, verschoben. Das Vergleichsfenster 14 wird dabei in einhundert Schritten zwischen der obersten Position an Ziffer 1 und der untersten Position an Ziffer 0 entlang der Abwicklung 6a" verschoben.

Nach jedem Verschiebeschritt wird eine Kreuzkorrelation zwischen dem Bild der Abwicklung im Bereich des verschobenen Fensters 14 und dem durch den Sensor erfasste Bild 12 der Zählscheibe durchgeführt. In der Fig. 8 ist beispielsweise ein Vergleich des Fensters 14a an der Position der Ziffer 2 mit dem Bild 12 und ein Vergleich des Fensters 14b an der Position zwischen den Ziffern 7 und 8 und dem Bild 12 dargestellt.

Zu erkennen ist, dass der Vergleich zwischen dem Bild 14b zwischen den Ziffern 7 und 8 und dem Bild 12 einen für diese Betrachtung maximalen Ähnlichkeitswert ergibt. Hieraus ergibt sich, dass offensichtlich das Bild 12 zu der Winkelposition erfasst wurde, zu der auf der Abwicklung das Fenster 14b die in Fig. 8 unten dargestellte Position zwischen den Ziffern 7 und 8 eingenommen hat. Da nun bekannt ist, um wie viele Schritte das Fenster 14 verschoben wurde, kann zumindest eine Nachkommastelle zwischen den Ziffern 7 und 8 bestimmt werden. Vorzugsweise ist, um das Fenster 14b mittig über die Ziffer 7 zu schieben, bei einer oben genannten Aufteilung der Abwicklung 6a" in 100 Intervalle eine Verschiebung um 70 Schritte notwendig. Um das Fenster 14b über die Ziffer 8 zu schieben, sind 80 Schritte notwendig. In der in Fig. 8 dargestellten Position des Fensters 14b ist dieses beispielsweise 74 Mal verschoben worden, so dass der erfasste Wert des Bildes 12 7,4 entspricht.

Durch die gezeigten Verfahren ist es möglich, eine Momentanleistung an einem mechanischen Zähler mit einer erhöhten Granularität zu bestimmen. Hierzu ist es möglich, virtuelle Nachkommastellen durch Auswertung der erfassten Bilder einer Zählscheibe in einem Ablesebereich zu bilden. Mit Hilfe der virtuellen Nachkommastellen kann der Differenzquotient zwischen zwei erfassten Zählscheiben mit einer erhöhten Genauigkeit bestimmt werden und die Momentanleistung, die daraus berechnet wird, kann eine erhöhte Genauigkeit aufweisen.

## Patentansprüche

1. Verfahren zur elektronischen Erfassung einer Momentanleistung an einem mechanischen Zählwerk, insbesondere an einem Zählwerk eines Verbrauchsmengenzählers, umfassend
- optisches Auslesen zumindest zweier Zählerstände des Zählwerks zu jeweils einem Zeitpunkt,
- Ermitteln eines Differenzquotienten aus den zwei Zählerständen und den jeweiligen Zeitpunkten, und
- Ausgeben des Differenzquotienten als Momentanleistung.

2. Verfahren nach Anspruch 1,
**dadurch gekennzeichnet,**
- **dass** der Zählerstand ein gemessenes Volumen repräsentiert und dass der Zählerstand multipliziert mit einer Zustandszahl und/oder einem Abrechnungsbrennwert einen Wert für die Arbeit ergibt und/oder dass der Zählerstand eine gemessene elektrische Arbeit repräsentiert.

3. Verfahren nach Anspruch 1 oder 2,
**dadurch gekennzeichnet,**
- **dass** die Zählerstände in Abständen von einer Minute, zwei Minuten, fünf Minuten oder 10 Minuten ausgelesen werden.

4. Verfahren nach einem der vorangehenden Ansprüche,
**dadurch gekennzeichnet,**
- **dass** die ausgegebene Momentanleistung zusammen mit einem weiteren Parameter in einem zeitlichen Verlaufsprotokoll ausgegeben werden, wobei der weitere Parameter insbesondere ein Temperaturwert ist.

5. Verfahren nach einem der vorangehenden Ansprüche,
**dadurch gekennzeichnet,**
- **dass** zumindest ein Grenzwert der Momentanleistung parametriert wird und durch Erreichen eines Grenzwerts ausgelöste Aktionen parametriert werden.

6. Verfahren nach einem der vorangehenden Ansprüche,
**dadurch gekennzeichnet,**
- **dass** eine Anzahl an Vorkommastellen und/oder Nachkommastellen des Zählwerks manuell parametriert werden.

7. Verfahren nach einem der vorangehenden Ansprüche,
**dadurch gekennzeichnet,**
- **dass** beim Auslesen des Zählerstands zumindest eine Ziffer einer Zählscheibe erfasst wird, insbesondere eine Ziffer einer einer Nachkommastelle zugeordneten Zählscheibe.

8. Verfahren nach einem der vorangehenden Ansprüche,
**dadurch gekennzeichnet,**
- **dass** zusätzlich zum Erfassen von Ziffern auf einer Zählscheibe eine relative Position einer Ziffer der Zählscheibe in einem Ablesebereich der Zählscheibe erfasst wird.

9. Verfahren nach einem der vorangehenden Ansprüche,
**dadurch gekennzeichnet,**
- **dass** eine Kantenlänge einer Öffnung eines Ablesebereichs erfasst wird.

10. Verfahren nach einem der vorangehenden Ansprüche,
**dadurch gekennzeichnet,**
- **dass** eine Position einer oberen Zifferngrenze und/oder eine Position einer unteren Zifferngrenze, insbesondere relativ zu einer Außenkante des Ablesebereichs erfasst wird und/oder dass abhängig von den erfassten Positionen der oberen Zifferngrenze und der unteren Zifferngrenze eine Position einer Mittellinie innerhalb des Ablesebereichs zwischen zwei Ziffern einer Zählscheibe berechnet wird und/oder dass abhängig von den erfassten Positionen der oberen Zifferngrenze und der unteren Zifferngrenze ein Freibereich zwischen zwei Ziffern auf der Zählscheibe berechnet wird und/oder dass abhängig von den erfassten Positionen der oberen Zifferngrenze und/oder der unteren Zifferngrenze und dem Freibereich eine Position einer Mittellinie innerhalb des Ablesebereichs zwischen zwei Ziffern einer Zählscheibe berechnet wird.

11. Verfahren nach einem der vorangehenden Ansprüche,
**dadurch gekennzeichnet,**
- **dass** ein erfasstes Bild eines Ablesebereichs mit einem Bild einer Abwicklung einer Zählscheibe verglichen wird und/oder abhängig von dem Vergleich eine Winkelposition der Zählscheibe bestimmt wird.

12. Verfahren nach einem der vorangehenden Ansprüche,
**dadurch gekennzeichnet,**
- **dass** ein erfasstes Bild eines Ablesebereichs mit einem Bild einer Abwicklung einer Zählscheibe kreuzkorreliert wird und/oder die Winkelposition der Zählscheibe abhängig von dem Ergebnis der Kreuzkorrelation bestimmt wird.

13. Verfahren nach einem der vorangehenden Ansprüche,
**dadurch gekennzeichnet,**
- **dass** eine Farbinformation von zumindest einer der Zählscheiben und/oder von einem die Zählscheiben umgebenden, eine Öffnung aufweisenden Ablesebereich ausgewertet wird, und
- **dass** abhängig von der Auswertung der Farbinformation zumindest eine der Zählscheiben zu einem Nachkommabereich oder einem Vorkommabereich zugeordnet wird.

14. Verfahren nach einem der vorangehenden Ansprüche,
**dadurch gekennzeichnet,**
**dass** Farbinformation von Ziffern auf den Zählscheiben ausgewertet wird und/oder dass die Farbinformation von der Blende in einer die Öffnung angrenzenden Fläche ausgewertet wird.

15. Verfahren nach einem der vorangehenden Ansprüche,
**dadurch gekennzeichnet,**
**dass** die Farbinformationen derart ausgewertet werden, dass eine Farbinformation genau einem von genau zwei verschiedenen Farbbereichen zugeordnet wird, wobei die Farbbereiche insbesondere rot und weiß sind.

16. Vorrichtung eingerichtet zum elektronischen Erfassen einer Momentanleistung an einem mechanischen Zählwerk, insbesondere an einem Zählwerk eines Verbrauchsmengenzählers, umfassend
- einen optischen Sensor eingerichtet zum optisches Auslesen zumindest zweier Zählerstände des Zählwerks zu jeweils einem Zeitpunkt,
- einem Prozessor eingerichtet zum Ermitteln eines Differenzquotienten aus den zwei Zählerständen und den jeweiligen Zeitpunkten, und
- einer Ausgabeeinrichtung eingerichtet zum Ausgeben des Differenzquotienten als Momentanleistung.
